# EUROPEAN PATENT APPLICATION

(11) **EP 3 376 323 A1**
(43) Date of publication of application: **19.09.2018**
(21) Application number: 16864328.6
(22) Date of filing: 10.11.2016
(51) Int. Cl.: G05B 19/418, G06Q 50/04

(54) **PRODUCT MANUFACTURING SYSTEM, METHOD AND PROGRAM**

(30) Priority: 11.11.2015 JP 2015221528
(71) Applicant: Mimaki Engineering Co., Ltd., Tomi-City, Nagano 389-0512 (JP)
(72) Inventor: ABE, Fumitoshi, Tomi-city Nagano 389-0512 (JP); KONDO, Daisuke, Tomi-city Nagano 389-0512 (JP)
(74) Representative: Horn Kleimann Waitzhofer Patentanwälte PartG mbB
(86) International application number: PCT/JP2016/083432
(87) International publication number: WO 2017/082367

(57) **Abstract**

To provide a product manufacturing system, method, and program that can efficiently execute a manufacturing process irrespective of a form of an object to be processed or conformity of manufacturing process conditions when collectively executing a plurality of manufacturing jobs. A step managing device (16, 20A, 20B), which constitutes part of a product manufacturing system (10, 10A, 10B), performs: creating a plurality of electronic documents (72) including information related to manufacturing jobs representing manufacturing units of a product (D1, D2); transmitting, to a manufacturing process device, process information (Ir) capable of specifying the manufacturing process conditions and the object to be processed associated with a selected manufacturing job from among the electronic documents (72) or a plurality of output objects (26); and causing a manufacturing process device (22, 28, 29) to execute the manufacturing process to be executed in work steps corresponding to the electronic documents (72).

## Description

### TECHNICAL FIELD

The present invention relates to a product manufacturing system, method, and program for manufacturing a product using a plurality of manufacturing process devices that can execute respective manufacturing processes corresponding to objects to be processed.

### BACKGROUND ART

In the related art, for example, a printer collects a plurality of manufacturing jobs the manufacturing process conditions of which conform to each other in a specific work step, and collectively executes the manufacturing jobs as a piece of work to improve manufacturing efficiency of the product in some cases.

Patent Literature 1 discloses a device and a method for classifying print jobs that are collectively stored and managed based on printing conditions, and appropriately imposing the print jobs in accordance with an input situation of the print job and a state of the printing device. Accordingly, a large number of unspecified print jobs that are intermittently generated can be efficiently printed.

### Citation List

### Patent Literature

Patent Literature 1: Japanese Patent Application Laid-open No. 2009-104454 ([0005] to [0007])

### SUMMARY OF INVENTION

### Technical Problem

Depending on a form of the object to be processed, there is a case in which it is efficient to execute the next work step while maintaining the form thereof without physically separating the object as an intermediate product for each manufacturing job. In this case, the same manufacturing process condition may be applied to all manufacturing jobs, or different manufacturing process conditions may be applied to the respective manufacturing jobs. In the latter case, an operator should sequentially execute the manufacturing process while selecting the manufacturing process condition each time.

However, regarding the device and the method disclosed in Patent Literature 1, the manufacturing situation described above is not considered at all. Thus, the operator needs to perform checking work sufficiently to prevent a work mistake including erroneous setting, and an expected effect cannot be obtained in some cases.

The present invention is made in view of such a situation, and provides a product manufacturing system, method, and program that can efficiently execute a manufacturing process irrespective of the form of the object to be processed or conformity of the manufacturing process conditions even in a case of collectively executing a plurality of manufacturing jobs.

### SOLUTIONS TO THE PROBLEMS

A "product manufacturing system" according to the present invention includes: a plurality of manufacturing process devices configured to execute a manufacturing process in accordance with a manufacturing process condition on an object to be processed to manufacture a product; and a step managing device connected to each of the manufacturing process devices in a communicable manner to store a set of the manufacturing process conditions, in which the step managing device creates an electronic document including information related to manufacturing jobs representing manufacturing units of the product corresponding to work steps including execution of the manufacturing process to be executed by each of the manufacturing process devices, transmits, to a manufacturing process device, process information capable of specifying the manufacturing process conditions and the object to be processed associated with a selected manufacturing job from among a plurality of electronic documents or a plurality of output objects of the electronic documents, and causes the manufacturing process devices to execute the manufacturing process to be executed in work steps corresponding to the electronic documents.

With this configuration, the manufacturing process can be efficiently executed irrespective of the form of the object to be processed or conformity of the manufacturing process conditions even in a case of collectively executing a plurality of manufacturing jobs.

The step managing device preferably includes: a document creation unit configured to create an electronic document including information related to manufacturing jobs representing manufacturing units of the product corresponding to work steps including execution of the manufacturing process to be executed by each of the manufacturing process devices; an operation reception unit configured to receive a selection operation indicating that one or more manufacturing jobs are selected by an operator from among the electronic documents created by the document creation unit or the output objects of the electronic documents; and an information transmission unit configured to transmit, after the operation reception unit receives the selection operation, process information capable of specifying the manufacturing process condition and the object to be processed associated with the selected manufacturing job to the manufacturing process device configured to execute the manufacturing process to be executed in a work step corresponding to the electronic document.

With this configuration, the operator can supply a desired manufacturing process condition to the manufacturing process device to be used immediately by performing a selection operation of selecting one or more of the manufacturing jobs using the electronic document corresponding to the work step including execution of the manufacturing process. Accordingly, checking work for preventing a work mistake including erroneous setting can be simplified, and the manufacturing process can be efficiently executed irrespective of the state of the object to be processed or conformity of the manufacturing process conditions even in a case of collectively executing a plurality of manufacturing jobs.

It is preferable that the product manufacturing system further include a reading module configured to be able to optically read content of the output object, the document creation unit create the electronic document including an identifying mark capable of specifying at least the manufacturing job, and the operation reception unit acquire data obtained by reading the identifying mark with the reading module to receive the selection operation. Only by performing simple operation of reading the identifying mark using the reading module, a desired manufacturing process condition can be supplied to the manufacturing process device to be used immediately.

It is preferable that the document creation unit create the electronic document further including a mark that is different from the identifying mark, and when the different mark is read by the reading module, the information transmission unit transmit, to the outside, a report signal indicating that the manufacturing process is to be interrupted or has been already interrupted. Only by performing simple operation of reading a mark that is different from the identifying mark using the reading module, the fact that the manufacturing process being executed is to be interrupted or has been already interrupted can be quickly reported, and consumption of processing materials or processing energy can be minimized.

The step managing device preferably includes: a document creation unit configured to create an electronic document including information related to manufacturing jobs representing manufacturing units of the product corresponding to work steps including execution of the manufacturing process to be executed by each of the manufacturing process devices; a processing order determination unit configured to determine a processing order by sorting the electronic documents created by the document creation unit or the output objects of the electronic documents based on process information capable of specifying the manufacturing process condition and the object to be processed associated therewith; and an information transmission unit configured to transmit the process information of the electronic document or the output object to the manufacturing process devices configured to execute the manufacturing process in the processing order.

With this configuration, a plurality of electronic documents corresponding to the work steps including execution of the manufacturing process can be created, the processing order of the electronic documents can be automatically determined, and a plurality of manufacturing process conditions can be supplied at the same time to the manufacturing process device to be used immediately. Accordingly, checking work for preventing a work mistake including erroneous setting can be simplified, and the manufacturing process can be efficiently executed irrespective of the state of the object to be processed or conformity of the manufacturing process conditions even in a case of collectively executing a plurality of manufacturing jobs.

It is preferable that the step managing device include an input unit configured to receive an input ot the processing order of the electronic document or the output objects of the electronic documents determined by the processing order determination unit, and the information transmission unit transmit the process information of the electronic document or the output object to the manufacturing process devices configured to execute the manufacturing process in the processing order input into the input unit.

With this configuration, the operator can change the processing order of the electronic document or the output object of the electronic document by the input operation through the input unit at any time.

The step managing device preferably includes an RIP device connected to the manufacturing process device in a communicable manner to generate rasterized image data to be transmitted to the manufacturing process device. With this configuration, the RIP device can be caused to have a function of controlling the manufacturing process device and a function as the step managing device, so that a system configuration can be minimized.

The step managing device includes: a server device configured to store the set of the manufacturing process conditions and including the document creation unit; and at least one RIP device connected to the server device in a communicable manner, connected to each of the manufacturing process devices in a communicable manner, including the processing order determination unit and the information transmission unit, and configured to generate rasterized image data to be transmitted to the manufacturing process device. With this configuration, work related to a work flow and work related to control of the devices can be separately performed by different devices, so that processing speed with the manufacturing system is improved.

In a case in which the same or a similar product was manufactured in the past, the information transmission unit preferably transmits the process information with a manufacturing process condition used in the past. Presentation of a manufacturing result in the past supports the operator who selects the manufacturing process condition.

The document creation unit preferably creates a step planning report for each work step as the electronic document. The operator can check presence of each manufacturing job in the work step handled by the operator based on the step planning report. This configuration can be support for securely executing a plurality of manufacturing jobs without exception.

The document creation unit preferably creates an order for each order reception unit as the electronic document. The operator can check presence of a plurality of manufacturing jobs constituting the order reception units based on the order. Accordingly, this configuration can be support for securely executing all manufacturing jobs without exception in performing delivery in order reception units.

The document creation unit preferably creates, as the electronic document, a manufacture list in which the products are put together across a plurality of order reception units. The operator can check presence of all manufacturing jobs constituting the order reception units based on the manufacture list. This configuration can be support for efficiently executing small-lot production of a wide variety of products.

The object to be processed preferably has a roll shape. When the object to be processed has a roll shape, generally, a large number of manufacturing jobs are to be collectively processed as the entire area thereof is large. That is, the effect described above is more obviously exhibited as the number of manufacturing jobs to be handled is larger.

The "product manufacturing method" according to the present invention is a method of using a product manufacturing system including: a plurality of manufacturing process devices configured to execute a manufacturing process in accordance with a manufacturing process condition on an object to be processed to manufacture a product; and a step managing device connected to each of the manufacturing process devices in a communicable manner to store a set of the manufacturing process conditions, the method causing the step managing device to execute: a creation step of creating an electronic document including information related to manufacturing jobs representing manufacturing units of the product corresponding to work steps including execution of the manufacturing process to be executed by each of the manufacturing process devices; and after the creation step, a reception step of receiving a selection operation indicating that one or more manufacturing jobs are selected by an operator from among the created electronic documents or the output objects of the electronic documents; and a transmission step of transmitting, after the selection operation is received, process information capable of specifying the manufacturing process condition and the object to be processed associated with the selected manufacturing job to the manufacturing process device configured to execute the manufacturing process to be executed in a work step corresponding to the electronic document; or after the creation step, a determination step of determining a processing order by sorting the created electronic documents or the output objects of the electronic documents based on process information capable of specifying the manufacturing process condition and the object to be processed associated therewith; and a transmission step of transmitting the process information of the electronic document or the output object to the manufacturing process devices configured to execute the manufacturing process in the processing order.

The "product manufacturing program" according to the present invention is a program to be executed by a product manufacturing system including: a plurality of manufacturing process devices configured to execute a manufacturing process in accordance with a manufacturing process condition on an object to be processed to manufacture a product; and a step managing device connected to each of the manufacturing process devices in a communicable manner to store a set of the manufacturing process conditions, the program causing the step managing device to execute: a creation step of creating an electronic document including information related to manufacturing jobs representing manufacturing units of the product corresponding to work steps including execution of the manufacturing process to be executed by each of the manufacturing process devices; and after the creation step, a reception step of receiving a selection operation indicating that one or more manufacturing jobs are selected by an operator from among the created electronic documents or the output objects of the electronic documents; and a transmission step of transmitting, after the selection operation is received, process information capable of specifying the manufacturing process condition and the object to be processed associated with the selected manufacturing job to the manufacturing process device configured to execute the manufacturing process to be executed in a work step corresponding to the electronic document; or after the creation step, a determination step of determining a processing order by sorting the created electronic documents or the output objects of the electronic documents based on process information capable of specifying the manufacturing process condition and the object to be processed associated therewith; and a transmission step of transmitting the process information of the electronic document or the output object to the manufacturing process devices configured to execute the manufacturing process in the processing order.

### EFFECT OF THE INVENTION

With the product manufacturing system, method, and program according to the present invention, the manufacturing process can be efficiently executed irrespective of the form of the object to be processed or conformity of the manufacturing process conditions even in a case of collectively executing a plurality of manufacturing jobs.

### DESCRIPTION OF THE DRAWINGS

Fig. 1 is an overall configuration diagram of a product manufacturing system according to a first embodiment.
Fig. 2 is an electrical block diagram of a step managing device illustrated in Fig. 1.
Fig. 3 is a front view of a step planning report as one form of an output object.
Fig. 4 is a flowchart presented for explaining an operation of the product manufacturing system illustrated in Fig. 1.
Fig. 5 is a table illustrating content of each work step constituting a manufacturing job.
Fig. 6 is a front view of an order and an order specification as one form of the output object.
Fig. 7 is a front view of an inspection list as one form of the output object.
Fig. 8 is a front view of a manufacture list as one form of the output object.
Fig. 9 is a front view of a sample list as one form of the output object.
Fig. 10 is an overall configuration diagram of a product manufacturing system according to a second embodiment.
Fig. 11 is an electrical block diagram of an RIP device illustrated in Fig. 10.
Fig. 12 is a flowchart presented for explaining an operation of the product manufacturing system illustrated in Fig. 10.
Fig. 13 is a conceptual diagram presented for explaining creation of a manufacture plan.
Fig. 14 is a conceptual diagram presented for explaining interruption of the order.
Fig. 15 is a conceptual diagram presented for explaining imposition of the order.
Fig. 16 is an overall configuration diagram of a product manufacturing system according to a third embodiment.

### DESCRIPTION OF EMBODIMENT

The following describes preferred embodiments of a product manufacturing system according to the present invention in relation to a product manufacturing method and a product manufacturing program with reference to the attached drawings.

### First embodiment

### Overall configuration of product manufacturing system 10

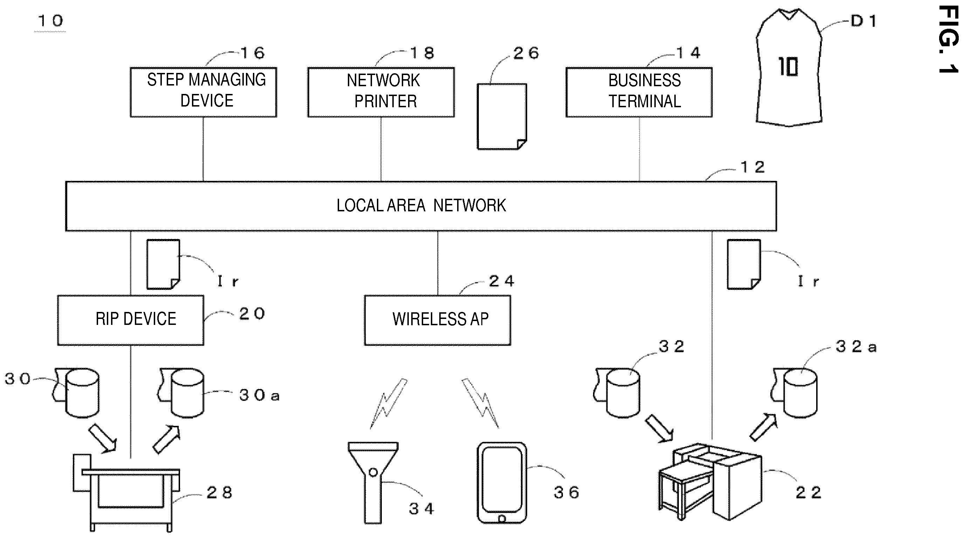

Fig. 1 is an overall configuration diagram of a product manufacturing system 10 according to the present embodiment. The product manufacturing system 10 is a system for manufacturing a customizable product D1 (in this example, a uniform for sports), and is constituted of a plurality of devices that can communicate with each other via a local area network 12.

The product manufacturing system 10 includes a business terminal 14, a step managing device 16, a network printer 18, a raster image processor (RIP) device 20, a transferring device 22, and a wireless access point (hereinafter referred to as a wireless AP 24) in addition to the local area network 12.

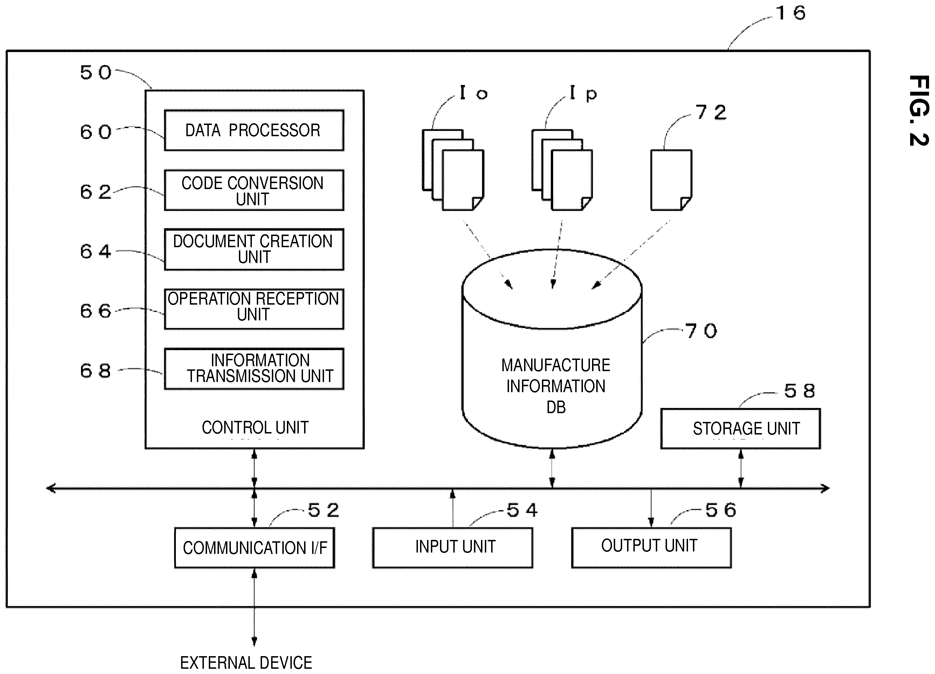

The business terminal 14 is a computer to which order reception information Io (Fig. 2) related to the product D1 can be input, and can transmit the order reception information Io to the step managing device 16. The step managing device 16 is a computer that unifies execution of a manufacturing job as a manufacturing unit of the product D1, and can transmit process information Ir (described later) to a printing device 28 or the transferring device 22. The network printer 18 prints an output object 26 based on printing data supplied from a device (for example, the step managing device 16) connected to the local area network 12.

The RIP device 20 performs a rasterize process on content data of vector format to create printing data, and supplies the printing data to the printing device 28. The printing device 28 is constituted of, for example, a printer that can eject sublimation type ink, and performs a printing process on an unprinted transfer paper roll 30 (object to be processed) to output a printed transfer paper roll 30a. The transferring device 22 of sublimation type performs a transferring process on an untransferred fabric roll 32 while heating and pressure-welding the printed transfer paper roll 30a to output a transferred fabric roll 32a.

The printing device 28 can execute a printing process corresponding to one type of or two or more types of printing conditions, and the transferring device 22 can execute a transferring process corresponding to one type of or two or more types of transferring conditions. Hereinafter, a device that can execute a manufacturing process corresponding to one or more types of "manufacturing process conditions" (in this case, the printing device 28 and the transferring device 22) may be collectively called "manufacturing process devices".

For example, the manufacturing process condition (printing condition) of the printing device 28 is a combination of a plurality of condition items including a type of medium, a type of ink, a type of printing mode, a type of color profile, resolution, a landing deviation correction amount, and a conveyance correction amount. The manufacturing process condition (transferring condition) of the transferring device 22 is a combination of a plurality of condition items including pressure, temperature, a type and thickness of medium, and conveying speed.

The wireless AP 24 is a relay that connects a wireless communication device conforming to a communication standard including WiFi to the local area network 12. In this example, a bar code reader 34 (reading module) that can optically read content of the output object 26 and a tablet terminal 36 that can be carried by an operator are wirelessly connected thereto.

### Electrical block diagram of step managing device 16

Fig. 2 is an electrical block diagram of the step managing device 16 illustrated in Fig. 1. The step managing device 16 is a computer including a control unit 50, a communication I/F 52, an input unit 54, an output unit 56, and a storage unit 58.

The communication I/F 52 is an interface for transmitting and receiving an electric signal to/from an external device. Due to this, the step managing device 16 can receive the order reception information Io related to the product D1 from the business terminal 14 (Fig. 1), and can transmit the process information Ir related to the manufacturing process (Fig. 1) to the manufacturing process device, via the communication I/F 52.

The input unit 54 includes a mouse, a keyboard, a touch panel, or a microphone. The output unit 56 includes a display or a speaker. By combining an input function of the input unit 54 and an output function of the output unit 56, a graphical user interface (GUI) can be established.

The storage unit 58 stores program, data, and the like required for controlling each component by the control unit 50. The storage unit 58 may be constituted of a non-transient and computer-readable storage medium. In this case, the computer-readable storage medium is a portable medium such as a magneto-optical disc, a ROM, a CD-ROM, and a flash memory, and a storage device such as a hard disk incorporated in a computer system. The storage medium may dynamically hold the program for a short time, or may hold the program for a certain time.

The control unit 50 is constituted of a processor of a central processing unit (CPU) or a micro-processing unit (MPU). By reading and executing the program stored in the storage unit 58, the control unit 50 can implement various functions of a data processor 60, a code conversion unit 62, a document creation unit 64, an operation reception unit 66, and an information transmission unit 68.

A database related to the order reception information Io and manufacture information Ip (hereinafter referred to as a manufacture information DB 70) is established inside (or outside) the step managing device 16. The order reception information Io includes, for example, customer information, a shipping address, content data, or a delivery date. The manufacture information Ip includes a manufacturing schedule, or manufacturing process conditions for each work step (hereinafter referred to as a set of the manufacturing process conditions) in addition to the order reception information Io. The "work step" means a work unit including execution of one time of manufacturing process.

The manufacture information DB 70 also stores an electronic document 72 for each work step and/or the electronic document 72 across a plurality of work steps. Examples of the type of the electronic document 72 include an order, an order specification, various step planning reports, a manufacture list, an inspection list, a shipping list, or a sample list (all of them will be described later).

### One form of output object 26

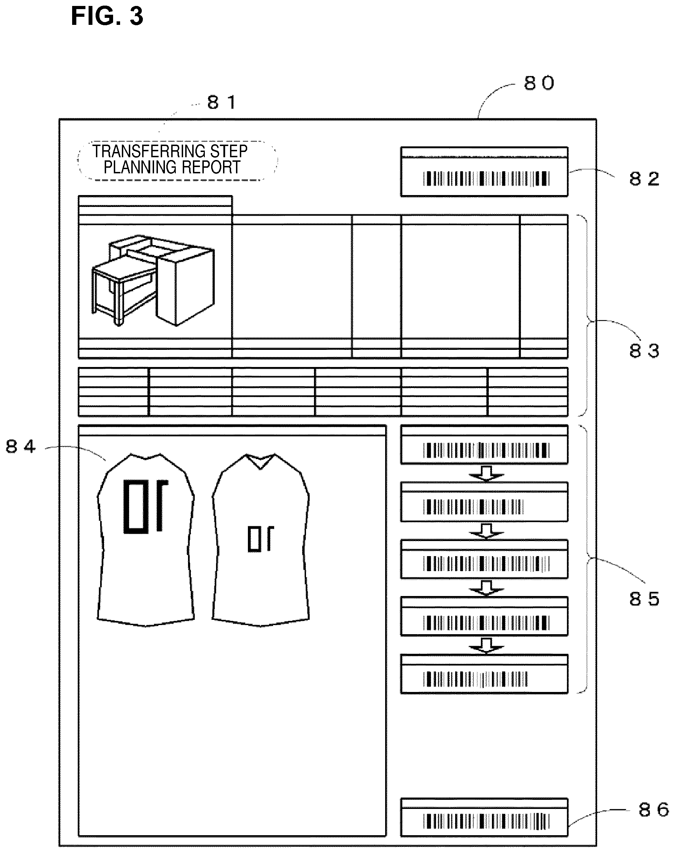

Fig. 3 is a front view of a step planning report 80 as one form of the output object 26. More specifically, Fig. 3 illustrates an example of the step planning report 80 for a transferring step (that is, a transferring step planning report). In the step planning report 80, arranged are a title column 81, a bar code for search 82, a condition column 83, an image column 84, a bar code for process 85 (identifying mark), and a bar code for interruption 86 (another mark) in this order from the top.

In the title column 81, written is a type of the electronic document 72, specifically, "transferring step planning report". In the condition column 83, for example, written are a type of the transferring device 22, a type of a medium to be used, and a set value (pressure, temperature, conveying speed, and the like) of the transferring device 22. In the image column 84, written is a thumbnail of the product D1, specifically, an image representing a finished front surface and back surface.

The bar code for search 82 indicates "ID information" put to the step planning report 80. The bar code for process 85 includes a plurality of (in this case, five) bar codes indicating trigger information for [1] starting the transferring step, [2] registering the medium to be used, [3] setting the transferring condition, [4] executing the transferring process, and [5] ending the transferring step. The bar code for interruption 86 indicates trigger information for "interrupting the transferring step".

### Operation of product manufacturing system 10

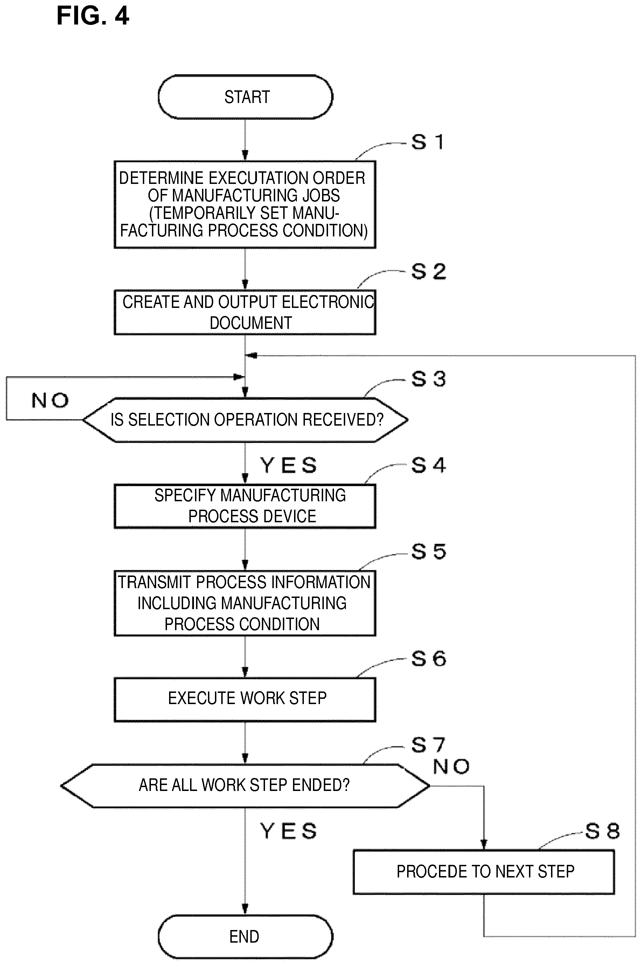

The product manufacturing system 10 according to the present embodiment is configured as described above. Subsequently, the following describes the operation of the product manufacturing system 10 focusing on the step managing device 16 with reference to the flowchart of Fig. 4.

At Step S1, a production manager determines a procedure of executing a plurality of manufacturing jobs in accordance with an order reception situation of the product D1. Before this determination, the step managing device 16 receives the order reception information Io input to the business terminal 14 via the local area network 12 and the communication I/F 52, and successively stores the order reception information Io in the manufacture information DB 70. Thereafter, the production manager checks content of the order reception information Io stored in the manufacture information DB 70, and creates a manufacture plan considering quality, cost, and a delivery date.

Thereafter, the data processor 60 of the step managing device 16 generates the manufacture information Ip reflecting the content of the manufacture plan in response to an operation by the production manager, and stores the manufacture information Ip in the manufacture information DB 70. For example, in a case of collectively executing a plurality of manufacturing jobs, the manufacture information Ip includes various pieces of information for each manufacturing job.

At Step S2, the document creation unit 64 of the step managing device 16 creates the electronic document 72 for each work step or the electronic document 72 across a plurality of work steps. Before creating the electronic document 72, the data processor 60 refers to the manufacture information DB 70 in response to an instruction operation by the production manager, and calls the manufacture information Ip to be content of the electronic document 72. The code conversion unit 62 adds different pieces of additional information to the ID information of the electronic document 72, and executes a code generating process to obtain a plurality of pieces of bar code data.

The document creation unit 64 arranges the obtained manufacture information Ip and bar code data in accordance with a predetermined format to create the electronic document 72 indicating the step planning report 80 (Fig. 3). Thereafter, the document creation unit 64 outputs the electronic document 72 to the network printer 18 via the communication I/F 52 and the local area network 12 in response to a print instruction by the production manager. The step planning report 80 obtained as the output object 26 is distributed to an operator, and used for managing each work step.

At Step S3, the operation reception unit 66 of the step managing device 16 determines whether there is a predetermined selection operation performed by the operator. The "selection operation" means an operation, performed by the operator, of selecting one or more manufacturing jobs from the electronic document 72 or the output object 26 that involves a plurality of manufacturing jobs. For example, the operation reception unit 66 determines whether there is an operation of optically reading the bar code for process 85 using the bar code reader 34. Alternatively, the operation reception unit 66 may determine whether there is an operation of touching a button indicating a manufacturing job as a selection target in the electronic document 72 displayed by the tablet terminal 36.

In this way, the document creation unit 64 may create the electronic document 72 including the bar code for process 85 that can specify at least the manufacturing job, and the operation reception unit 66 may receive the selection operation by acquiring data obtained by reading the bar code for process 85 with the bar code reader 34. Only by performing a simple reading operation with the bar code reader 34, a desired manufacturing process condition can be supplied to the manufacturing process device to be used immediately.

In any operation, the step managing device 16 acquires scan information via the wireless AP 24, the local area network 12, and the communication I/F 52, receives the selection operation if the scan information represents a normal value (YES at Step S3), and advances the process to the next step (S4). By contrast, if the selection operation has not been received yet (NO at Step S3), the process remains at Step S3 until the selection operation is performed.

At Step S4, the control unit 50 specifies the manufacturing process device to be used immediately, based on the scan information received at Step S3. Specifically, the code conversion unit 62 acquires the ID information and the additional information of the electronic document 72 by decoding the scan information. The data processor 60 can specify one or a plurality of manufacturing process devices associated with the ID information or the additional information by referring to the manufacture information DB 70.

At Step S5, the information transmission unit 68 transmits desired process information Ir to the manufacturing process device specified at Step S4 (hereinafter also referred to as a specified processing device). Before transmitting the process information Ir, the data processor 60 extracts the manufacturing process condition and the object to be processed associated with the selected manufacturing job. The information transmission unit 68 then transmits the process information Ir that can specify the manufacturing process condition and the object to be processed to the specified processing device related to the work step corresponding to the electronic document 72 (specifically, the specified processing device that executes the manufacturing process). In the example of Fig. 3, the process information Ir includes the untransferred fabric roll 32 and the transferring condition thereof, and the specified processing device is the transferring device 22.

In a case in which the same or a similar product D1 was manufactured in the past, the information transmission unit 68 may transmit the manufacturing process condition used in the past together with the process information Ir. Presentation of the manufacturing result in the past supports the operator who selects the manufacturing process condition.

At Step S6, after checking that the identification information of the object to be processed specified with the process information Ir matches the identification information added to an actual object, the operator performs a work step including the desired manufacturing process. That is, in this work step, the specified processing device specified at Step S4 executes the manufacturing process in accordance with the manufacturing process condition transmitted at Step S5. When a plurality of manufacturing jobs are selected at the same time at Step S3, the manufacturing process is executed by successively using the same or different manufacturing process conditions.

When another mark that is different from the bar code for process 85, in this case, the bar code for interruption 86 is read, the product manufacturing system 10 may perform an operation of interrupting the manufacturing process performed by the manufacturing process device. Specifically, the information transmission unit 68 transmits a report signal indicating to interrupt the manufacturing process to the outside, for example, to the manufacturing process device related to the work step indicated by the electronic document 72. Only by performing a simple operation of reading the bar code for interruption 86 with the bar code reader 34, the fact that the manufacturing process being executed is interrupted can be quickly reported, and consumption of processing materials or processing energy can be minimized.

Alternatively, when the bar code for interruption 86 is read, the product manufacturing system 10 may perform an operation of reporting, to a person related to the product D1, the fact that the manufacturing process performed by the manufacturing process device has been already interrupted. Specifically, the information transmission unit 68 transmits, to the outside (for example, the step managing device 16), the report signal indicating that the manufacturing process has been already interrupted. Only by performing a simple operation of reading the bar code for interruption 86 with the bar code reader 34, the fact that the manufacturing process being executed has been already interrupted can be quickly reported, and consumption of processing materials or processing energy can be minimized.

At Step S7, the operator checks whether all the work steps required for manufacturing the product D1 are ended. If not all the work steps have been ended yet (NO at Step S7), the process proceeds to the next work step (Step S8). Thereafter, the process returns to Step S3, and Steps S3 to S8 are successively repeated.

By contrast, when all the work steps are ended (YES at Step S7), the plurality of manufacturing jobs are ended at the same time. In this way, by executing a plurality of manufacturing jobs in parallel, productivity of the product D1 is significantly improved, and high-level QCD (quality, cost, and a delivery date) is achieved.

### Effect of product manufacturing system 10

As described above, the product manufacturing system 10 includes a plurality of manufacturing process devices (the transferring device 22 and the printing device 28) that can manufacture the product by executing the manufacturing process corresponding to the manufacturing process condition on the object to be processed (the unprinted transfer paper roll 30 and the untransferred fabric roll 32), and the step managing device 16 that is connected to each manufacturing process device in a communicable manner and stores the set of the manufacturing process conditions (manufacture information Ip).

The step managing device 16 includes [1] the document creation unit 64 configured to create the electronic document 72 including information related to the manufacturing jobs representing the manufacturing units of the product D1 corresponding to the work steps including execution of the manufacturing process to be executed by each of the manufacturing process devices, [2] the operation reception unit 66 configured to receive the selection operation indicating that one or more manufacturing jobs are selected by the operator from among the created electronic documents 72 or the output objects 26 of the electronic documents 72, and [3] the information transmission unit 68 configured to transmit, after the selection operation is received, the process information Ir that can specify the manufacturing process condition and the object to be processed associated with the selected manufacturing job, to the manufacturing process device configured to execute the manufacturing process that is executed in the work step corresponding to the electronic document 72.

The method and the program using the product manufacturing system 10 causes the step managing device 16 to execute [1] a creation step (S2) of creating the electronic document 72 including information related to the manufacturing jobs representing the manufacturing units of the product D1, a reception step (S3) of receiving the selection operation indicating that one or more manufacturing jobs are selected by the operator from among the created electronic documents 72 or the output objects 26, and [3] a transmission step (S5) of transmitting, after the selection operation is received, the process information Ir that can specify the manufacturing process condition and the object to be processed associated with the selected manufacturing job, to the manufacturing process device configured to execute the manufacturing process that is executed in the work step corresponding to the electronic document 72.

With this configuration, by performing the selection operation of selecting one or more of a plurality of manufacturing jobs by using the electronic document 72 corresponding to the work step including execution of the manufacturing process, the operator can supply a desired manufacturing process condition to the manufacturing process device to be used immediately. Accordingly, checking work for preventing a work mistake including erroneous setting can be simplified, and the manufacturing process can be efficiently executed irrespective of the state of the object to be processed or conformity of the manufacturing process conditions even in a case of collectively executing a plurality of manufacturing jobs.

### Specific example of work flow

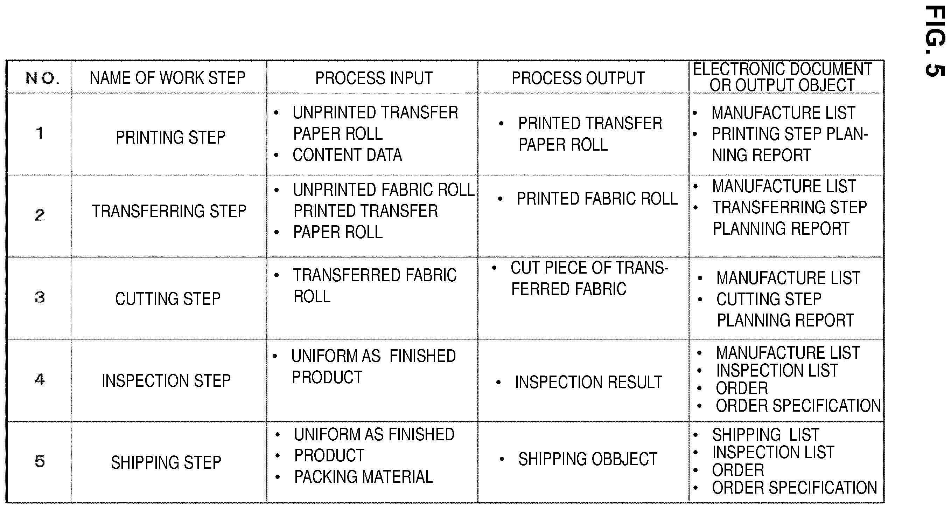

Subsequently, the following describes a specific example of the work flow of the product manufacturing system 10 with reference to Figs. 5 to 9.

Fig. 5 is a table illustrating content of each work step constituting the manufacturing job. In a case in which the product D1 is a uniform for sports, the manufacturing job includes five work steps, that is, [1] a printing step, [2] a transferring step, [3] a cutting step, [4] an inspection step, and [5] a shipping step. Actually, a "sewing step" of sewing cut pieces of transferred fabric together is included between the cutting step and the inspection step, but the sewing step is assumed to be outsourced to a contractor.

### 1. Printing step

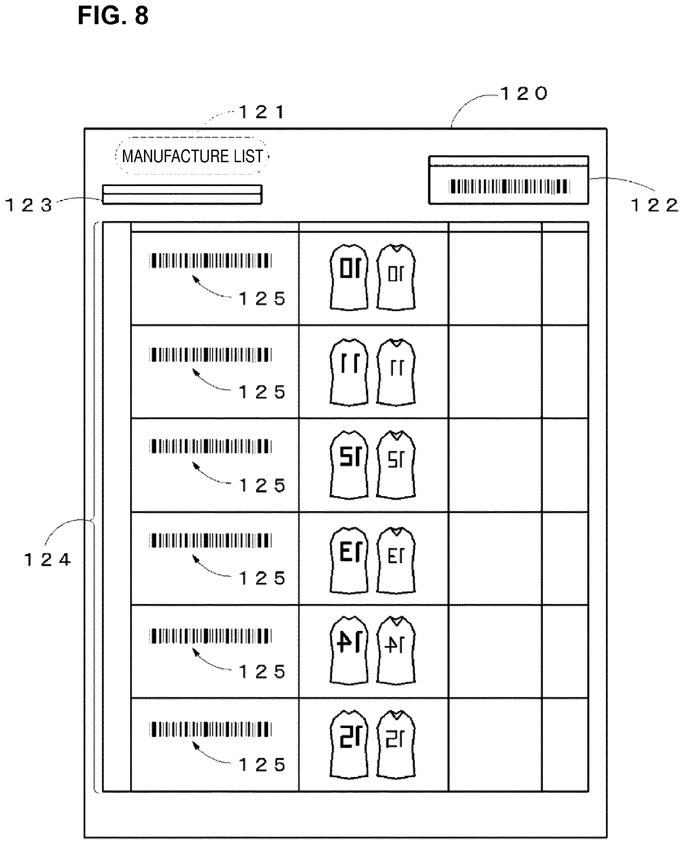

The operator of the printing step receives a printing step planning report and a manufacture list 120 (Fig. 8) issued by the production manager. The printing step planning report is created in accordance with a common format of the step planning report 80, so that the following describes a procedure of the printing step with reference to Figs. 1 and 3.

The operator successively reads content of the step planning report 80 with the bar code reader 34 in accordance with the progress of the printing step. For example, by reading the bar code for search 82, the ID information of the step planning report 80 can be automatically input to a condition search column on a search screen (not illustrated). By acquiring and saving time at which a specific bar code for process 85 is read (specifically, start time and end time), lead time for each work step and for each operator can be grasped.

Visible information regarding the progress of the work step may be displayed on a device connected to the local area network 12, for example, the step managing device 16 (output unit 56), the business terminal 14, or the tablet terminal 36. Due to this, even a sales representative, a production manager, or an operator at a place distant from a work site can check an overall manufacturing step in real time.

A skilled operator may set a printing condition suitable for a type and a thickness of a medium by finely adjusting a correction amount (for example, a landing deviation correction amount) specific to a main body via an operation unit of the printing device 28. Thereafter, when the operator performs an operation of reading the bar code for process 85 of "start printing", the RIP device 20 acquires desired process information Ir from the step managing device 16.

The RIP device 20 executes a rasterize process on content data representing drawing content of the product D1 in response to an instruction operation by the operator, and supplies obtained printing data to the printing device 28. Then the printing device 28 starts a printing process using a desired printing condition.

In a case of collecting a plurality of manufacturing jobs having the same printing condition, the printing process may be successively executed by using a common printing condition while changing the content data by reading the bar code for process 85 once. By contrast, in a case of collecting a plurality of manufacturing jobs having different printing conditions, the printing process may be executed by successively selecting the printing condition by reading the bar code for process 85 corresponding to the manufacturing job. By reading the bar code for interruption 86, the fact that the printing process being executed has been already interrupted is quickly reported.

In a case in which the object to be processed has a roll shape, generally, a large number of manufacturing jobs are to be collectively processed as the entire area is large. That is, as the number of manufacturing jobs to be handled is larger, an effect of improving efficiency of the printing process is more remarkably exhibited. The operator can check presence of each manufacturing job in the work step handled by the operator based on the step planning report 80. This configuration can be support for securely performing a plurality of manufacturing jobs without exception.

When the printing process performed by the printing device 28 is ended, the RIP device 20 transmits, to the step managing device 16, the printing condition that is actually used. Accordingly, in a case of manufacturing the same or a similar product D1 in the future, the information transmission unit 68 can be referred to as the manufacturing process condition used in the past.

In this way, the printing step that causes the unprinted transfer paper roll 30 and the content data to be a "process input" and causes the printed transfer paper roll 30a to be a "process output" is ended. Thereafter, the operator collectively delivers the printed transfer paper roll 30a and the manufacture list 120 to the next transferring step.

### 2. Transferring step

The operator of the transferring step receives the transferring step planning report issued by the production manager in addition to the printed transfer paper roll 30a and the manufacture list 120.

The operator successively reads the bar code for process 85 of the step planning report 80 with the bar code reader 34 in accordance with the progress of the transferring step. When the operator performs an operation of reading the bar code for process 85 of "start transferring", the transferring device 22 acquires the desired process information Ir from the step managing device 16. A skilled operator may change the transferring condition to be suitable for the type and the thickness of the medium via an operation unit of the transferring device 22.

The transferring device 22 starts the transferring process using the desired transferring condition. Accordingly, ink on the printed transfer paper roll 30a is transferred onto the untransferred fabric roll 32, and the transferred fabric roll 32 is obtained.

As described above, the transferring step is ended, the transferring step of causing the unprinted fabric roll 32 and the printed transfer paper roll 30a to be the "process input", and causing the transferred fabric roll 32a to be the "process output". Thereafter, the operator collectively delivers the transferred fabric roll 32a and the manufacture list 120 to the next cutting step.

### 3. Cutting step

An operator of the cutting step receives a cutting step planning report issued by the production manager in addition to the transferred fabric roll 32a and the manufacture list 120. The operator successively reads the bar code for process 85 of the step planning report 80 with the bar code reader 34 in accordance with the progress of the cutting step.

In a case in which a cutting device (not illustrated) is connected to the local area network 12, the step managing device 16 transmits the desired process information Ir to the cutting device following a procedure similar to that of the printing step and the transferring step. By contrast, in a case in which the cutting device is not connected to the local area network 12, the cutting device cuts the transferred fabric roll 32a into a predetermined size in response to an instruction operation by the operator.

As described above, the cutting step is ended, the cutting step of causing the transferred fabric roll 32a to be the "process input", and causing cut pieces of transferred fabric (not illustrated) to be the "process output". The operator then delivers the cut pieces of transferred fabric to an outsourcing contractor. Thereafter, a uniform as a finished product is delivered through the sewing step.

### 4. Inspection step

An operator of the inspection step receives an order 90, an order specification 100, and an inspection list 110 issued by the production manager in addition to the uniform as a finished product and the manufacture list 120.

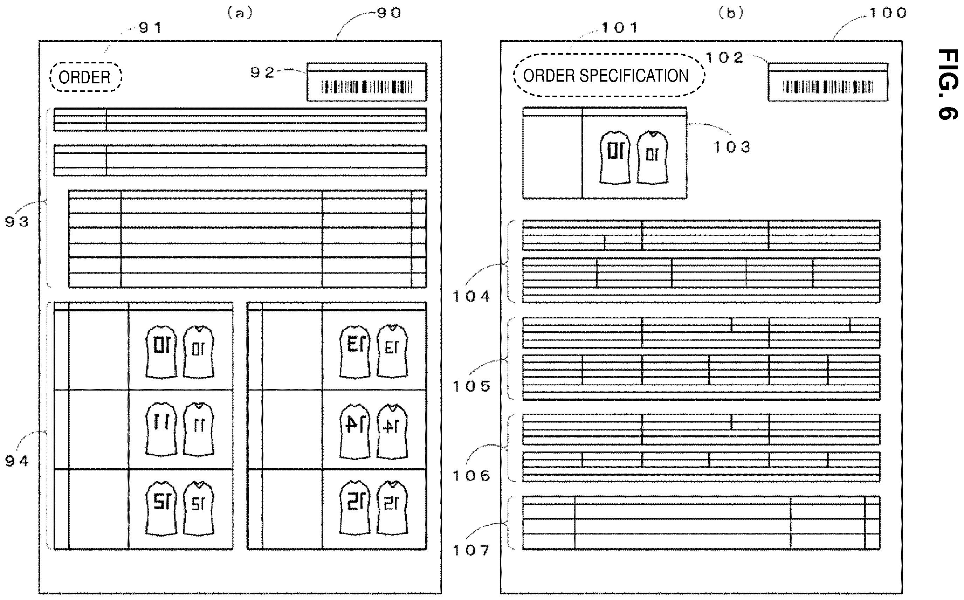

Fig. 6(a) is a front view of the order 90 as one form of the output object 26. The order 90 is synonymous with an instruction, and is a document for instructing work contents. In the order 90, arranged are a title column 91, a bar code for search 92, an information column 93, and an image list 94 in this order from the top.

In the title column 91, written is the type of the electronic document 72, specifically, "order". The bar code for search 92 indicates "ID information" put to the order 90. In the information column 93, for example, written are a delivery date, an order name, classification of manufacture, a sales representative, customer information, an address of a delivery destination, a quantity, and a name of a shipped item. In the image list 94, written is a thumbnail of the product D1 collected in units of manufacturing jobs or in order reception units.

Fig. 6(b) is a front view of the order specification 100 as one form of the output object 26. The order specification 100 is a document indicating detail information related to a specific product D1. In the order specification 100, arranged are a title column 101, a bar code for search 102, an image column 103, condition columns 104, 105, and 106, and an information column 107 in this order from the top.

In the title column 101, written is the type of the electronic document 72, specifically, "order specification". The bar code for search 102 indicates the "ID information" put to the order specification 100. In the image column 103, written is a thumbnail of the product D1. In the condition columns 104 to 106, written are three manufacturing process conditions used in the respective work steps, specifically, a printing condition, a transferring condition, and a cutting condition. In the information column 107, for example, written are an address of a delivery destination, a quantity, and a name of a shipped item.

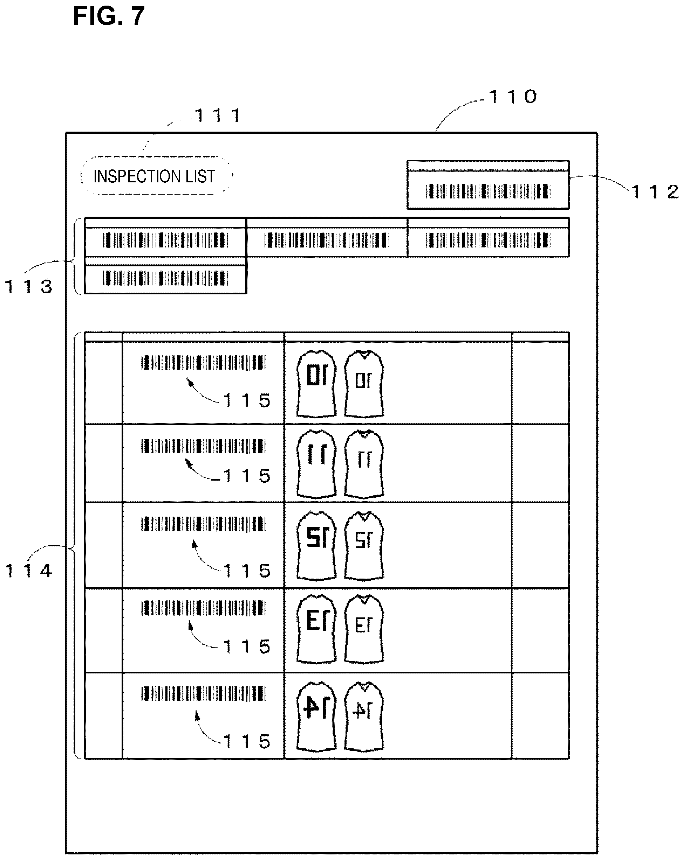

Fig. 7 is a front view of the inspection list 110 as one form of the output object 26. In the inspection list 110, arranged are a title column 111, a bar code for search 112, a bar code for process 113 (identifying mark), and an image list 114 in this order from the top. In each row of the image list 114, a bar code for acceptance test 115 is printed.

In the title column 111, written is the type of the electronic document 72, specifically, "inspection list". The bar code for search 112 indicates the "ID information" put to the inspection list 110. The bar code for process 113 indicates trigger information for [1] starting the inspection step, [2] interrupting the inspection step, [3] ending the inspection step, and [4] an inspecting and shipping step.

Fig. 8 is a front view of the manufacture list 120 as one form of the output object 26. In the manufacture list 120, arranged are a title column 121, a bar code for search 122, a condition column 123, and an image list 124 in this order from the top. In each row of the image list 124, a bar code for search 125 is printed.

In the title column 121, written is the type of the electronic document 72, specifically, "manufacture list". The bar code for search 122 indicates the "ID information" put to the manufacture list 120. In the condition column 123, written is a specific manufacturing process condition, for example, a type of a medium to be used. In the image list 124, written are an execution order of the printing process, the ID information of the order specification 100 (refer to Fig. 6(b)), an output size, and a quantity, in addition to the thumbnail of the product D1, for example. The bar code for search 125 indicates the "ID information" applied in units of the order specification 100.

The operator successively reads the bar code for process 113 of the inspection list 110 with the bar code reader 34 in accordance with the progress of the inspection step. After the content and the quantity of products D1 are checked, and an operation of reading the bar code for acceptance test 115 is performed, the product D1 corresponding to the bar code for acceptance test 115 is accepted after inspection. As described above, the inspection step is ended, the inspection step of causing the uniform as a finished product to be the "process input", and causing an inspection result to be the "process output".

The operator may check the content and the quantity of the products D1 using the manufacture list 120 in place of the inspection list 110. In this case, it is convenient for the operator that a bar code for acceptance test (not illustrated) is arranged in the manufacture list 120 in place of the bar code for search 125 or separately from the bar code for search 125. Specifically, after checking the content and the quantity of the products D1 and performing an operation of reading the bar code for acceptance test, the operator can accept the products D1 corresponding to the bar code for acceptance test after inspection in units of the order specification 100 at a time.

### 5. Shipping step

An operator of the inspection step receives the shipping list issued by the production manager in addition to the uniform as a finished product, the order 90, and the order specification 100.

The operator successively reads a bar code for acceptance test (not illustrated) of the shipping list with the bar code reader 34 in accordance with the progress of the shipping step. When the operator packs up the product D1 using packing materials, completes a shipping procedure, reads a bar code for process (not illustrated) of "end the shipping step", and performs an end operation with the tablet terminal 36, the shipping step is ended. The end operation may be directly performed with the tablet terminal 36 without reading the bar code for acceptance test with the bar code reader 34.

By preparing the order 90 for each order reception unit, the operator can check presence of a plurality of manufacturing jobs constituting the order reception units based on the order 90. This configuration can be support for securely performing all the manufacturing jobs without exception in delivering the products in order reception units.

By preparing the manufacture list in which the products D1 are put together across a plurality of order reception units, the operator can check presence of all the manufacturing jobs constituting a plurality of order reception units based on the manufacture list. This configuration can be support for efficiently executing small-lot production of a wide variety of products.

### Application example

As described above, the work flow illustrated in Fig. 5 is executed by the product manufacturing system 10 in Fig. 1. Subsequently, the following describes an application example of the product manufacturing system 10.

### (First example) Creation of sample list

Before the products D1 are manufactured, the sales representative may present a plurality of samples having different colors to a customer. In this case, the production manager prints a sample list 130 indicating a list of samples of different colors.

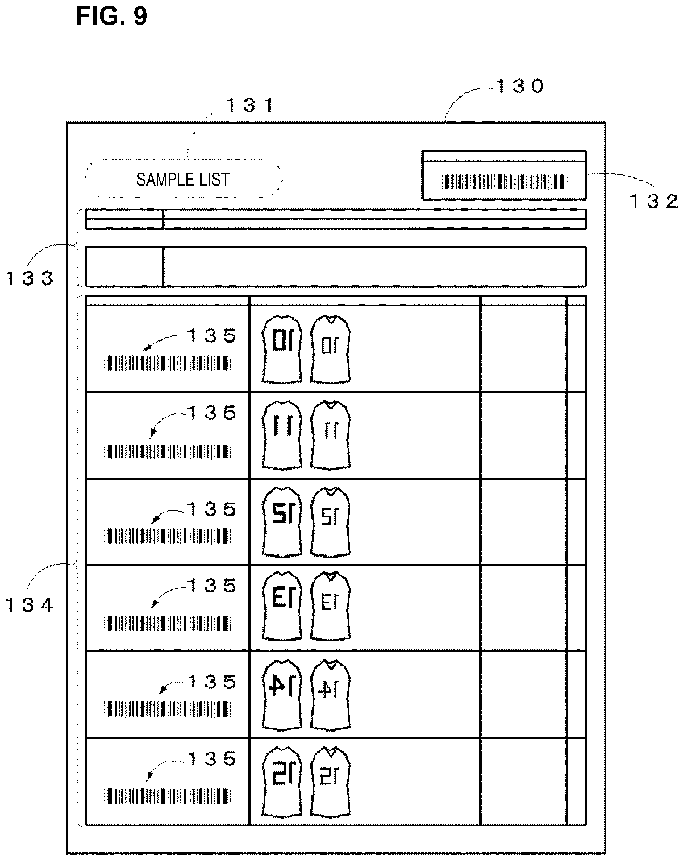

Fig. 9 is a front view of the sample list 130 as one form of the output object 26. In the sample list 130, arranged are a title column 131, a bar code for search 132 (identifying mark), a bar code for process 133, and an image list 134 in this order from the top. In each row of the image list 134, a bar code for acceptance test 135 (identifying mark) is printed.

The operator successively reads the bar code for process 133 of the sample list 130 with the bar code reader 34 in accordance with the progress of a sample making step. After the sample of the product D1 is checked and an operation of reading the bar code for acceptance test 135 is performed, a sample corresponding to the bar code for acceptance test 135 is accepted after inspection. Accordingly, a customer (orderer) can select a favorite color from a plurality of samples presented by the sales representative.

### (Second example) Multi-process executed by a plurality of manufacturing process devices

There is a case in which a plurality of manufacturing process devices of the same type (for example, printing devices 28) are installed in the same production base. In this case, the step managing device 16 may transmit the process information Ir including the same manufacturing process condition to a plurality of printing devices 28 at the same time after having distributed the whole processes to the printing devices 28. Due to this, one work step can be executed in parallel, and productivity of the product D1 is improved accordingly.

### (Third example) Multi-process in a plurality of production bases

There is a case in which a plurality of manufacturing process devices of the same type (for example, the printing devices 28) are installed in a plurality of production bases. In this case, the step managing device 16 may transmit the process information Ir including the same manufacturing process condition to the printing devices 28 at the same time after having distributed the whole processes to the printing devices 28. Due to this, one work step can be executed in parallel, and productivity of the product D1 is improved accordingly.

### Remarks

The present invention is not limited to the embodiment and the modification described above, and can be freely modified without departing from the gist of the present invention.

For example, the product manufacturing system 10 is not limited to the form as described above, and a device configuration suitable for the product D1 may be employed. For example, the number of work steps, the number and the types of the manufacturing process devices, and the types and the number of the objects to be processed may be optionally changed.

### Second embodiment

Next, the following describes a product manufacturing system 10A according to a second embodiment. The following describes only a configuration different from that of the product manufacturing system 10 according to the first embodiment. A configuration having the same function as that of the product manufacturing system 10 according to the first embodiment is denoted by the same reference numeral, and redundant description will not be repeated.

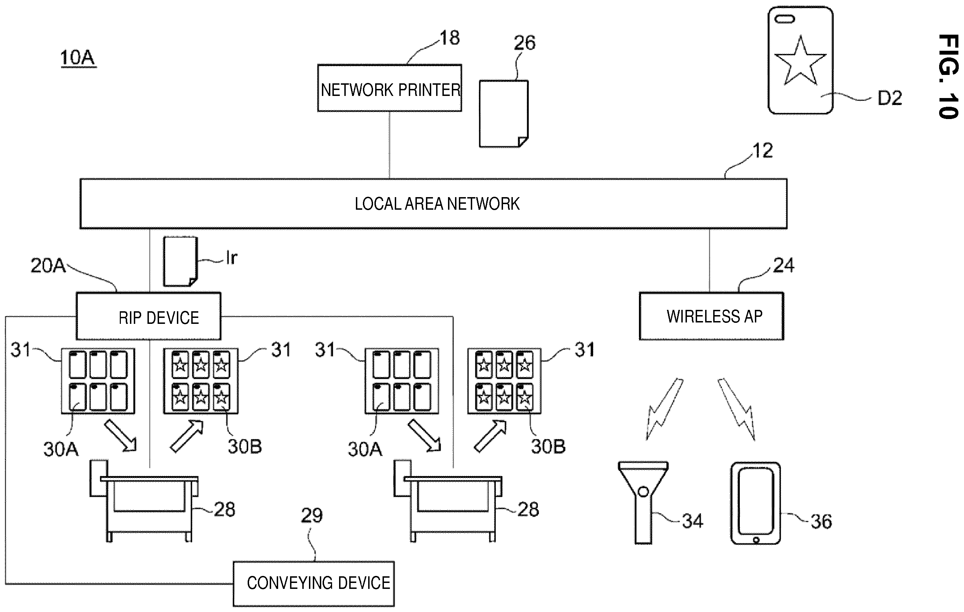

As illustrated in Fig. 10, the product manufacturing system 10A includes the network printer 18, a raster image processor (RIP) device (step managing device) 20A, manufacturing process devices (a conveying device 29, the printing device 28), and a wireless access point (hereinafter referred to as the wireless AP 24), which are connected to each other in a communicable manner via the local area network 12. In the product manufacturing system 10A, the RIP device 20A serves the functions of the business terminal 14 and the step managing device 16 in the product manufacturing system 10 according to the first embodiment.

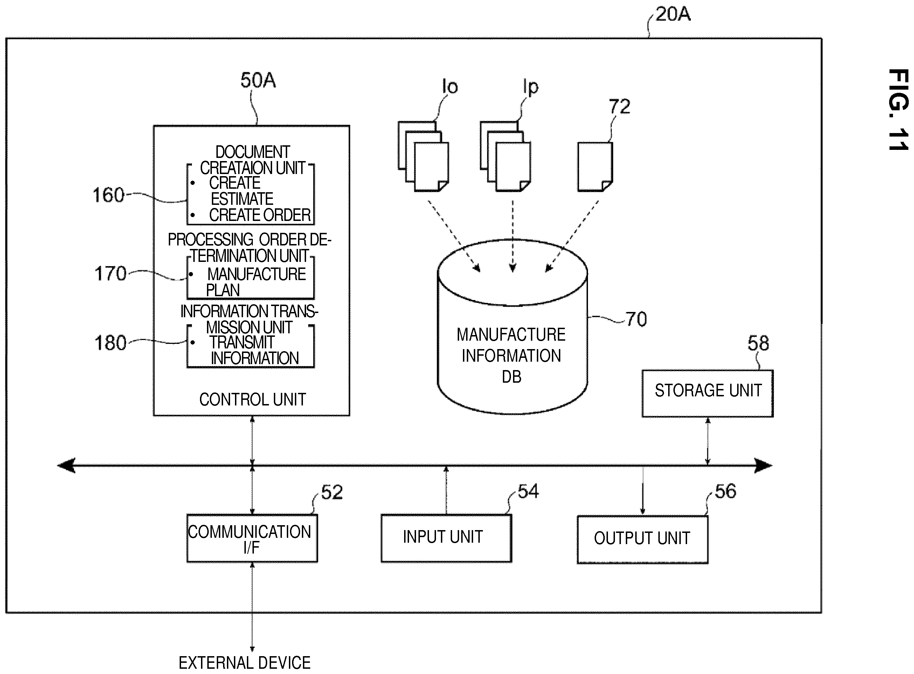

The RIP device 20A is a computer for creating an estimate related to manufacture of a product D2 (in this example, a case for a portable terminal), and for inputting the order reception information Io (refer to Fig. 11) related to the product D2. The RIP device 20A is also a computer for managing execution of the manufacturing job as a manufacturing unit of the product D2, and transmits the process information Ir to the conveying device 29 or the printing device 28.

Desired management software and software for controlling the devices are installed in the RIP device 20A. A plurality of printing devices 28, 28 ... and at least one conveying device 29 are connected to one RIP device 20A in a communicable manner via a USB cable or a LAN cable, for example.

The conveying device 29 receives the process information Ir related to the product D2, carries an object to be printed (object to be processed) 30A corresponding to the product D2 in the printing device 28 based on the process information Ir, and carries out an object to be printed 30B that has been subjected to printing (hereinafter referred to as a "printed object") from the printing device 28 after the process performed by the printing device 28 is completed. In the present embodiment, a plurality of objects to be printed 30A in a state of being placed on a palette 31 are carried in the printing device 28, and after the process is completed, a plurality of printed objects 30B in a state of being placed on the palette are carried out from the printing device 28. The object to be printed may be carried in the conveying device 29 by the operator, or may be automatically carried in by the conveying device 29 from a place where the objects to be printed are stocked.

Fig. 11 is a block diagram illustrating details of the RIP device 20A illustrated in Fig. 10. The RIP device 20A includes a control unit 50A, the communication I/F 52, the input unit 54, the output unit 56, the storage unit 58, and the manufacture information DB 70.

The control unit 50A is constituted of a processor of a central processing unit (CPU) or a micro-processing unit (MPU). By executing the program stored in the storage unit 58, the control unit 50A can implement various functions as a document creation unit 160 (creation of an estimate, creation of an order), a processing order determination unit 170 (manufacture plan), and an information transmission unit 180 (transmission of information).

The document creation unit 160 creates an estimate, an order, and the electronic document 72 including information related to the manufacturing job indicating a manufacturing unit of the product D2 corresponding to the work step including execution of the manufacturing process to be executed by each of the manufacturing process devices (the conveying device 29, the printing device 28).

The processing order determination unit 170 sorts a plurality of electronic documents 72 created by the document creation unit 160 or output objects 26 of the electronic documents 72 based on the process information Ir that can specify the manufacturing process condition and the object to be processed associated therewith to determine the processing order.

The information transmission unit 180 transmits the process information Ir to a plurality of manufacturing process devices (the conveying device 29, the printing device 28) that execute the manufacturing process in processing order determined by the processing order determination unit 170.

### Specific example of operation and work flow of product manufacturing system 10A

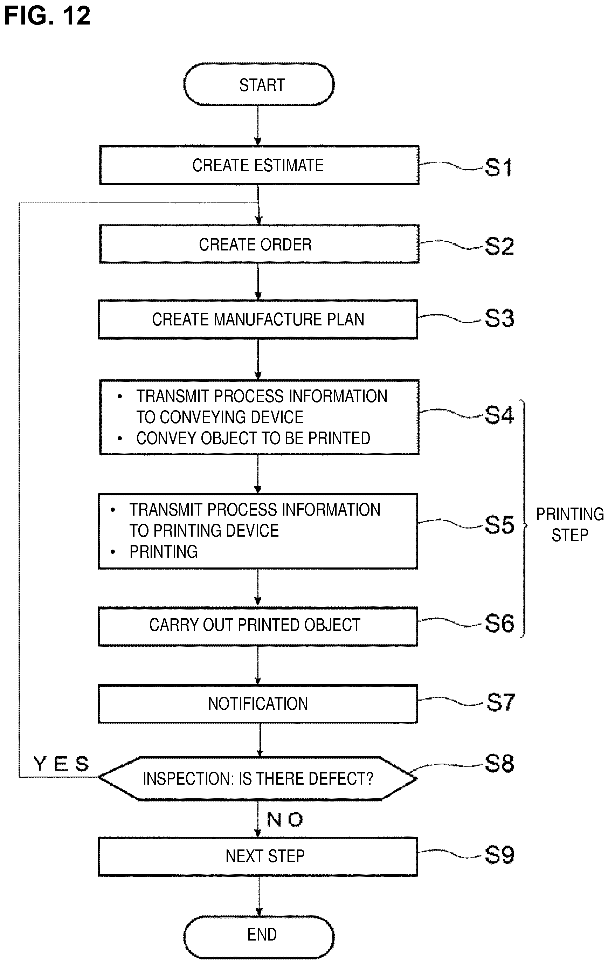

Subsequently, the following describes an operation of the product manufacturing system 10A focusing on the RIP device 20A with reference to the flowchart in Fig. 12, and describes a specific example of the work flow in the manufacturing job executed by the product manufacturing system 10A with reference to Figs. 10 to 12.

Fig. 12 is a flowchart illustrating a processing procedure performed by the product manufacturing system. In a case in which the product D2 is a case for a portable terminal, the manufacturing job includes three work steps of [1] a printing step, [2] an inspection step, and [3] a shipping step. The following mainly describes the printing step.

### 1. Estimate creation step

At Step S1, when receiving an estimation request for manufacture of a specific product D2 from a customer, the sales representative extracts estimation conditions (for example, material, print data, a size, a quantity, a shipping address, a quality condition, and a desired delivery date), and inputs the extracted information (information related to the product D2) to the RIP device 20A. The RIP device 20A creates a temporary estimate based on the extracted information. The temporary estimate is shared with the production manager via the RIP device 20A.

The RIP device 20A detects an operation input by the production manager, performs a rasterize process on the content data representing the drawing content of the product D2 based on information described in the temporary estimate described above, and calculates overall cost for the product D2 such as ink consumption and manufacturing time based on the obtained data. When the production manager inputs the calculated information into the RIP device 20A, the RIP device 20A updates the information of the temporary estimate based on the calculated information, and creates a final estimate (for example, an estimation number, a material name, material cost, prime cost, print data, a printing condition, a step, a quality condition, design cost, data processing cost, a quantity, a shipping address, a shipping charge, a shipping method, a packing method, management cost, a profit, labor cost, an estimated amount, customer information, and a delivery date).

In a case in which the customer changes the condition, or negotiates for a charge, the sales representative inputs new information into the RIP device 20A, and the RIP device 20A creates the estimate again based on the new information.

### 2. Order creation step

At Step S2, when the customer agrees with the content of the estimate, and an order for manufacturing the product D2 is formally received from the customer, the sales representative notifies the production manager that the order for work is received. Subsequently, the production manager instructs (makes an operation input to) the RIP device 20A to create an order 90A of the ordered product D2. The RIP device 20A reads, from the manufacture information DB 70, the manufacture information Ip required for manufacturing the product D2 (a material name, material cost, prime cost, print data, a printing condition, a step, a quality condition (quality preference: printed by one printer, delivery date preference: printed by a plurality of printers), design cost, data processing cost, a quantity, a shipping address, a shipping charge, a shipping method, a packing method (a packing type, the number of pieces of content, the number of packs), management cost, a profit, labor cost, an estimated amount, and a delivery date), and a manufacture definition (the number of copies that are printed at the same time) to create the order 90A. In creating the order 90A, the production manager may perform data processing or designing (sorting of pieces of data) for the product D2 as needed.

### 3. Manufacture plan creation step

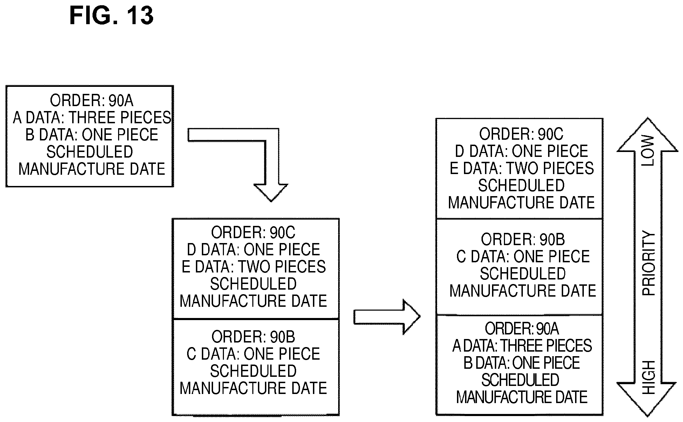

At Step S3, the production manager instructs (makes an operation input to) the RIP device 20A to create the manufacture plan. Specifically, the RIP device 20A automatically sorts a group of orders including an order for another product that has been already ordered by the same customer for which manufacture is in the wait state and an order for a product from another customer for which manufacture is in the wait state, based on a predetermined rule (refer to Fig. 13).

The "predetermined rule" should be set in advance by the production manager in an order such as an order of earlier delivery date of an article, an order of order reception, and an order of higher importance. "Automatically sorts" means that the RIP device 20A reads the manufacture information Ip of the product of each order from the manufacture information DB 70, and gives priority in manufacture thereto to determine a processing order based on the manufacture information Ip and the set rule.

For example, as illustrated in Fig. 13, when the order 90A for a product the delivery date of which is earlier than that of the orders 90B and 90C is created after the orders 90B and 90C waiting for processing, the RIP device 20A creates a manufacture plan for processing the order 90A with top priority.

### 4. Printing step

The printing step is started when the RIP device 20A instructs the manufacturing process device (the conveying device 29, the printing device 28) to execute the printing step based on the manufacture plan. The following exemplifies a case of transmitting the process information Ir associated with a plurality of orders 90A to 90C to a plurality of printing devices 28, 28 ... at the same time, or a case of transmitting a processing device Ir to a plurality of printing devices 28, 28 ... at the same time so as to distribute the total manufacturing number of the products D2 in one order 90A to the printing devices 28, 28 ..., depending on a quality condition of the manufacture information Ip (necessity for printing by a plurality of printing devices 28).

At Step S4, the RIP device 20A successively transmits, to the conveying device 29 firstly, the process information Ir associated with the orders 90A to 90C based on the manufacture plan in the processing order in accordance with the progress of the preceding printing step. The process information Ir includes information about what type of object to be printed 30A is carried in which one of the printing devices 28, 28 ..., the information including material, a color, and a quantity, for example. After receiving a carrying-in instruction from the RIP device 20A, the conveying device 29 carries a designated object to be printed 30A in a designated printing device 28, and transmits a carrying-in end signal to the RIP device 20A thereafter. The operator previously performs work of attaching, to the printing device 28, the palette to which the object to be printed 30A is set, at any time as needed.

At Step S5, the RIP device 20A that has received the carrying-in end signal of the object to be printed 30A from the conveying device 29 transmits the process information Ir to the printing devices 28, 28 ... based on the manufacture plan. Each of the printing devices 28, 28 ... that has received the process information Ir starts printing on the object to be printed 30A based on the process information Ir. After the printing is ended, each of the printing devices 28, 28 ... transmits a printing end signal to the RIP device 20A. When the production manager or the operator instructs (makes an operation input to) the RIP device 20A to execute interruption, the RIP device 20A can transmit a signal to stop printing to the printing device 28 to interrupt the printing process.

At Step S6, after the printing performed by the printing devices 28, 28 ... is ended, the RIP device 20A transmits, to the conveying device 29, a signal to instruct to carry out the printed object 30B. After receiving a carrying-out instruction signal, the conveying device 29 carries out the printed object 30B from each of the printing devices 28, 28 ..., and transmits a carrying-out end signal to the RIP device 20A thereafter. After the printed object 30B is carried out, the conveying device 29 transmits the carrying-out end signal to the RIP device 20A.

In this way, the printing step is ended, the printing step of causing the unprinted object to be printed 30A and the content data to be the "process input", and causing the printed object 30B after printing to be the "process output". When at least the printing step is ended, the RIP device 20A stores, in the manufacture information DB 70, the printing condition actually used. Accordingly, in a case of manufacturing the same or a similar product D2 in the future, the RIP device 20A can be referred to as the manufacturing process condition used in the past.

At Step S7, the RIP device 20A notifies, via the output unit 56 for example, the production manager or the operator that the printed object 30B is carried out. The production manager or the operator that has received the notification checks whether there is a fault such as incomplete printing and a defect in a printed object B through visual inspection at Step S8.

For example, if a defect is found in the product D2 of B data of the order 90A (YES at Step S8), the production manager or the operator inputs specific content (the number of defective products, content of a fault) to the RIP device 20A via the input unit 54 to instruct to create a new order 90A including only the B data (Step S2). Subsequently, the production manager instructs the RIP device 20A to create a manufacture plan based on the new order 90A (Step S3).

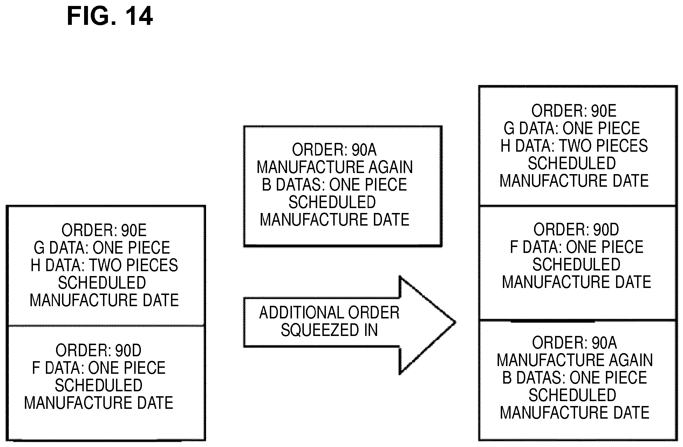

Naturally, the processing device Ir based on the new order 90A includes information indicating an emergency processing issue, and the RIP device 20A gives top priority to manufacture of the product D2 of the B data of the new order 90A based on the process information Ir. That is, the RIP device 20A causes the new order 90A to squeeze in orders 90D and 90E waiting for manufacture as an emergency processing issue (refer to Fig. 14).

By contrast, when the production manager does not find any defective product (NO at Step S8), the process proceeds to the next step (the cutting step, the inspection step, and the shipping step (refer to the corresponding steps in the first embodiment)) (Step S9), and all of the work steps are ended.

As described above, the product manufacturing system 10A includes the RIP device 20A. The RIP device 20A is connected, in a communicable manner, to a plurality of manufacturing process devices (the printing device 28, the conveying device 29) that can manufacture the product D2 by executing a manufacturing process corresponding to the manufacturing process condition on the object to be printed 30A, and the RIP device 20A stores the set of the manufacturing process conditions (the manufacture information Ip). In this way, in the product manufacturing system 10A, manufacturing work of the same product D2 or different products can be performed in parallel by a plurality of printing devices 28, 28 ....

The method and the program using the product manufacturing system 10A can facilitate estimation related to manufacture of the product D2, order reception, a manufacture plan, manufacture (a manufacturing job), and a linked operation with preceding and subsequent devices (a conveying device, an inspecting device, and the like), promote automation in manufacture, and improve productivity of the product D2. Specifically, in the printing step, human interference with manufacturing work can be reduced, so that a human error can be prevented.

The RIP device 20A has already created the printing data by executing the rasterize process on the content data of a vector format at a step of creating the estimate, so that cost such as ink consumption and working hours can be calculated before actual manufacture. The RIP device 20A can also calculate the cost by reading a past track record from the manufacture information DB 70. When an order for the same product D2 is received again, a new estimate can be quickly created by calling and referring to information of the past estimate from the manufacture information DB 70.

The RIP device 20A creates orders 90A, ... in which the manufacture definition and the quality condition (manufacture information Ip) required for manufacturing the product D2 are set based on the received estimate, so that an error in specifications of the product D2 can be eliminated. The production manager can reflect a track record of work before starting manufacture (data processing, sorting (designing) of data, and the like) in the orders 90A, ... via the RIP device 20A. When the electronic document 72 including the orders 90A, ... is stored in the manufacture information DB 70 or content of the order 90 is updated, the RIP device 20A can notify the operator of generation or change of work without delay.

The RIP device 20A can create an efficient manufacture plan by determining priority of manufacture from a group of a plurality of orders 90A, 90B, 90C ... based on the process information Ir associated with the created orders 90A, ... (refer to Fig. 13).

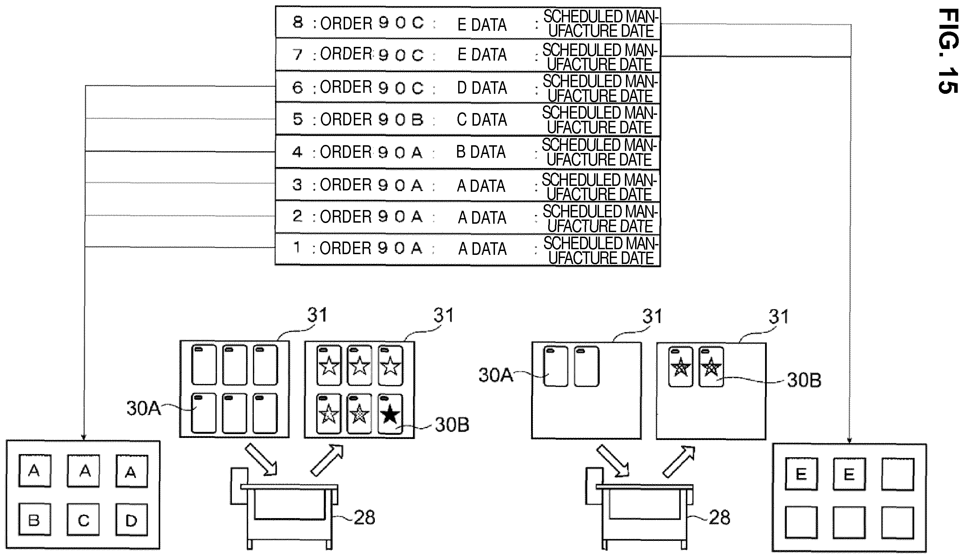

The RIP device 20A can also create the manufacture plan after having performed imposition of the orders 90A, 90B, 90C .... The following describes "imposition" with reference to Fig. 15. For example, there are a plurality of orders 90A, 90B, and 90C arranged in the processing order. The order 90A includes three pieces of A data and a piece of B data as data to be printed, the order 90B includes a piece of C data as data to be printed, and the order 90C includes a piece of D data and two pieces of E data as data to be printed.

In such a case, the RIP device 20A instructs one of the printing devices 28 to print the A data and the B data of the order 90A, the C data of the order 90B, and the D data of the order 90C on one object to be printed 30A, and instructs the other one of the printing devices 28 to print the E data of the order C on one object to be printed 30A. The "imposition" means to enable a plurality of pieces of data or a plurality of the same pieces of data to be printed on one object to be printed 30A.

The RIP device 20A updates the manufacture plan in accordance with a manufacturing situation, so that, for example when the order 90A that is created later is an emergency issue, a manufacture plan for processing the order 90A with top priority can be created (refer to Fig. 14). Even when the manufacturing process device (printing device 28) assumed to be used for manufacture breaks down, the RIP device 20A can create the manufacture plan again to assign the manufacturing process assigned to the manufacturing process device that has broken down to another manufacturing process device.

The production manager or the operator can check an object to be processed, a quantity, and a printed image that are required, for example, via the RIP device 20A. Due to this, a mistake such as a mix-up can be prevented. At a step in which the RIP device 20A transmits the process information Ir to the manufacturing process device, a printing condition can be set, printing can be performed, and the like without executing the rasterize process on the content data again, so that an operation error can be prevented.

A scheduled manufacturing number and a current manufacturing number of the products D2 based on the process information Ir are displayed on the RIP device 20A, so that the production manager or the operator can accurately grasp the manufacturing situation.

As described above, the RIP device 20A centrally manages at least creation of the estimate and the order, the manufacture plan, and the manufacturing situation (a type, a quantity, a printed image, and a current manufacturing number of the object to be printed), so that intervention of the production manager or the operator can be minimized, and a human error can be prevented. When the RIP device 20A notifies the preceding and subsequent devices of information about a manufacturing state, cooperation among the devices in the product manufacturing system 10A can be improved.

The RIP device 20A can record cost information such as ink consumption, a medium use amount, and working hours after printing on the object to be processed is ended, and compare the estimate with a manufacturing result. Accordingly, an estimate can be created considering a difference between a budget and actual amounts at the time of next estimation by referring to a comparison result. Examples of a comparison target include the cost (prime cost, ink consumption, a medium use amount, labor cost, a shipping charge, and the like), a profit, and the like.

The RIP device 20A also has a report function. Thus, the RIP device 20A can display a daily report (manufacturing order number, manufacturing quantity, the number of faults, content of fault, and an operation rate), a weekly report, a monthly report, and an annual report (total manufacturing quantity, the number of faults, and an operation rate). By defining operating time per day and operation days, the RIP device 20A can calculate the operation rate of the printing device 28 from the manufacturing time of the printing device 28.

### Application example

Subsequently, the following describes an application example of the product manufacturing system 10A.

### First example

The product manufacturing system 10A may cooperate with an external system (not illustrated). This configuration enables [1] input with a file such as JDF and CSV corresponding to a routine format, for example. This configuration also enables [2] import of data corresponding to the respective steps such as estimation data, order-received data, and order data, and work of the product manufacturing system 10A can be executed concurrently with work executed by the external system. This configuration also enables [3] data such as a manufacturing result to be output to the external system using a file such as JDF and CSV corresponding to the routine format.

### Second example

Software for creating variable data may be installed in the RIP device 20A. The "variable data" means, in a case of a uniform for sports for example, data different for each uniform such as a player's name and a player's number, which is different from base data such as a team logo and a sponsor's name that are printed on all uniforms. For example, in a case of a case for a portable terminal, the "variable data" means data different for each case such as a number or photograph data as a main printing image, which is different from base data such as a background and an outer frame as a base printing image that is printed on all cases.

The RIP device 20A [1] registers, in the order 90A, a base image file and an insertion data file required for creating the variable data, so that the variable data can be centrally managed. The RIP device 20A [2] can also register, in the order, a file created by variable data creation software as print data.

### Third example

The RIP device 20A may have a manufacturing situation notification function. Thus, for example, the RIP device 20A can make [1] a report of manufacturing situation at every designated time, [2] a report of manufacture completion, and [3] a report of error occurrence, from a production site to the outside of the production site by e-mail. Accordingly, the manufacturing situation can be grasped at a place other than the production site.

### Others

A control device such as a programmable logic controller (PLC) may be arranged between the RIP device 20A and the manufacturing process device.

The operator may select the orders 90A, ... for manufacture to be started from a group of orders waiting for manufacture, prepare an object to be processed, and instruct the RIP device 20A to start printing thereafter. In this case, the RIP device 20A includes the operation reception unit 66 and the information transmission unit 68 of the step managing device 16 according to the first embodiment, and starts printing through a remote operation/local operation by the production manager or the operator.

In a step after determining the processing order, the production manager or the operator may input, through the input unit 54, the processing order of the electronic document 72 or the output objects 26 of the electronic documents 72 determined by the processing order determination unit 170. The RIP device 20A that has received the input of the processing order instructs the information transmission unit 180 to transmit the process information Ir of the electronic document 72 or the output object 26 to a plurality of manufacturing process devices 28 and 29 that executes the manufacturing process in the processing order input through the input unit 54. The information transmission unit 180 may transmit the process information Ir after receiving a human instruction from the production manager or the operator.

The manufacture plan is not automatically created by the processing order determination unit 170, but may be freely created by the operator by selecting the orders 90A, ... in accordance with the manufacturing situation. At the time of creating the manufacture plan, the operator can perform imposition work of a plurality of orders 90A, ....

The second embodiment describes a method of directly printing the print data on the object to be printed 30A, but the method may include the transferring step similarly to the first embodiment.

The printed object 30B is not necessarily visually inspected. For example, a conveyance state of the printed object 30B may be imaged with a camera and the like while conveying the printed object 30B placed on a predetermined conveying device, and the printed object 30B can be automatically inspected based on a taken image, and not through human eyes. Due to this, the work step can be more automated.

The conveying device 29 is not necessarily an essential component. In a case in which the conveying device 29 is not arranged, the operator appropriately carries in/out the object to be printed 30A and the printed object 30B.

The production manager or the operator can [1] record a track record of packing work (number of packs), and [2] record shipment for each pack (display of a quantity of shipped products with respect to a quantity of ordered products D2, display of a shipping situation (not shipped, partially shipped, completely shipped)), in the RIP device 20A. In this way, the packing and shipping situation of the product D2 can be checked with the RIP device 20A, and the production manager or the operator can quickly answer an inquiry about shipment from a customer.

### Remarks

The present invention is not limited to the embodiment and the modification described above, and can be freely modified without departing from the gist of the present invention.

For example, the product manufacturing system 10A is not limited to the form as described above, and a device configuration suitable for the product D2 may be employed. For example, the number of work steps, the number and the types of the manufacturing process devices, and the types and the number of the objects to be processed may be optionally changed. The product manufacturing systems 10 and 10A can be combined with each other.

### Third embodiment

Next, the following describes a product manufacturing system 10B according to a third embodiment. The following describes only a configuration different from that of the product manufacturing system 10A according to the second embodiment. A configuration having the same function as that of the product manufacturing systems 10 and 10A according to the first embodiment and the second embodiment is denoted by the same reference numeral, and redundant description will not be repeated.

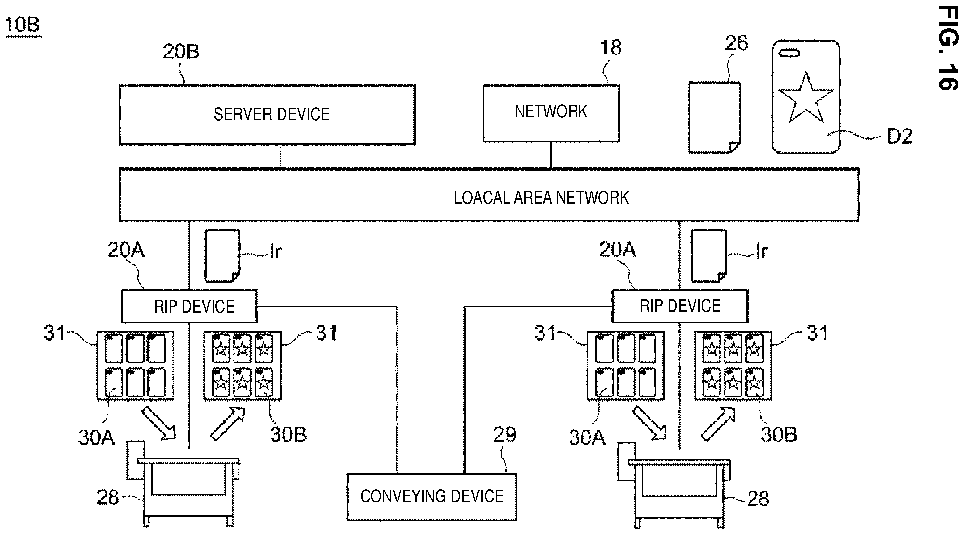

As illustrated in Fig. 16, the product manufacturing system 10B includes the network printer 18, the step managing device, the manufacturing process devices (the conveying device 29, the printing device 28), and the wireless access point (wireless AP (not illustrated)), which are connected to each other in a communicable manner via the local area network 12.

In the product manufacturing system 10B, the step managing device includes the raster image processor (RIP) device 20A and a server device 20B. The server device 20B serves part of the function (work flow management) of the RIP device 20A of the product manufacturing system 10A according to the second embodiment.

The server device 20B is a computer that stores the set of the manufacturing process conditions, creates an estimate related to manufacture of the product D2, and inputs the order reception information Io (refer to Fig. 2) related to the product D2. That is, the server device 20B includes the document creation unit 160 of the RIP device 20A in the product manufacturing system 10A according to the second embodiment. The RIP device 20A serves a function of unifying execution of the manufacturing job as a manufacturing unit of the product D2.

Desired management software is installed in the server device 20B. A plurality of RIP devices 20A, 20A ... are connected to the server device 20B in a communicable manner via a USB cable or a LAN cable, for example. In the product manufacturing system 10B, software for creating variable data may be installed in the server device 20B.

### Specific example of operation and work flow of product manufacturing system 10B

The server device 20B serves functions of "creating an estimate" and "creating an order", which are served by the RIP device 20A of the product manufacturing system 10A according to the second embodiment. Other operation and work flow are the same as those of the product manufacturing system 10A described above.

As described above, the product manufacturing system 10B includes the server device 20B, so that the server device 20B shares a load of work process of the RIP device 20A, and thus a work load on the RIP device 20A is reduced. In this way, the RIP device 20A can execute the rasterize process on the content data representing the drawing content of the product D2, or a process of transmitting the processing device Ir to the manufacturing process device without delay.

The product manufacturing system 10B naturally exhibits the same function and effect as those of the product manufacturing system 10A.

### Remarks

The present invention is not limited to the embodiment and the modification described above, and can be freely modified without departing from the gist of the present invention.

For example, the product manufacturing system 10B is not limited to the form as described above, and a device configuration suitable for the product D2 may be employed. For example, the number of work steps, the number and the types of the manufacturing process devices, and the types and the number of the objects to be processed may be optionally changed. The product manufacturing systems 10, 10A, and 10B can be combined with each other.

### DESCRIPTION OF REFERENCE SIGNS

10, 10A, 10B Product manufacturing system
12 Local area network
14 Business terminal
16 Step managing device
18 Network printer
20, 20A RIP device
20B Server device
22 Transferring device (manufacturing process device)
24 Wireless AP
26 Output object
28 Printing device (manufacturing process device)
29 Conveying device
30 Unprinted transfer paper roll (object to be processed)
30A Object to be printed
32 Untransferred fabric roll (object to be processed)
34 Bar code reader (reading module)
36 Tablet terminal
50 Control unit
60 Data processor
62 Code conversion unit
64 Document creation unit
66 Operation reception unit
68 Information transmission unit
70 Manufacture information DB
72 Electronic document
80 Step planning report
81, 91, 101, 111, 121, 131 Title column
82, 92, 102, 112, 122, 125, 132 Bar code for search
83, 104 to 106, 123 Condition column
84, 103 Image column
85, 113 Bar code for process (identifying mark)
86 Bar code for interruption (another mark)
90, 90A to 90E Order
93, 107, 133 Information column
94, 124, 134 Image list
100 Order specification
110 Inspection list
115, 135 Bar code for acceptance test
120 Manufacture list
130 Sample list
160 Document creation unit
170 Processing order determination unit
180 Information transmission unit
D1, D2 Product
Io Order reception information
Ip Manufacture information
Ir Process information

## Claims

1. A product manufacturing system comprising:
a plurality of manufacturing process devices configured to execute a manufacturing process in accordance with a manufacturing process condition on an object to be processed to manufacture a product; and
a step managing device connected to each of the manufacturing process devices in a communicable manner, the step managing device storing a set of the manufacturing process conditions, wherein
the step managing device is configured:
to create an electronic document including information related to manufacturing jobs representing manufacturing units of the product corresponding to work steps including execution of the manufacturing process to be executed by each of the manufacturing process devices,
to transmit, to a manufacturing process device, process information capable of specifying the manufacturing process conditions and the object to be processed associated with a selected manufacturing job from among a plurality of electronic documents or a plurality of output objects of the electronic documents, and
to cause the manufacturing process devices to execute the manufacturing process to be executed in work steps corresponding to the electronic documents.

2. The product manufacturing system according to claim 1, wherein the step managing device includes:
a document creation unit configured to create an electronic document including information related to manufacturing jobs representing manufacturing units of the product corresponding to work steps including execution of the manufacturing process to be executed by each of the manufacturing process devices;
an operation reception unit configured to receive a selection operation indicating that one or more manufacturing jobs are selected by an operator from among the electronic documents created by the document creation unit or the output objects of the electronic documents; and
an information transmission unit configured to transmit, after the operation reception unit receives the selection operation, process information capable of specifying the manufacturing process condition and the object to be processed associated with the selected manufacturing job to the manufacturing process device configured to execute the manufacturing process to be executed in a work step corresponding to the electronic document.

3. The product manufacturing system according to claim 2, further comprising a reading module configured to be able to optically read content of the output object, wherein
the document creation unit creates the electronic document including an identifying mark capable of specifying at least the manufacturing job, and
the operation reception unit acquires data obtained by reading the identifying mark with the reading module to receive the selection operation.

4. The product manufacturing system according to claim 3, wherein
the document creation unit creates the electronic document further including a mark that is different from the identifying mark, and
when the different mark is read by the reading module, the information transmission unit transmits, to the outside, a report signal indicating that the manufacturing process is to be interrupted or has been already interrupted.

5. The product manufacturing system according to claim 1, wherein the step managing device includes:
a document creation unit configured to create an electronic document including information related to manufacturing jobs representing manufacturing units of the product corresponding to work steps including execution of the manufacturing process to be executed by each of the manufacturing process devices;
a processing order determination unit configured to determine a processing order by sorting the electronic documents created by the document creation unit or the output objects of the electronic documents based on process information capable of specifying the manufacturing process condition and the object to be processed associated therewith; and
an information transmission unit configured to transmit the process information of the electronic document or the output object to the manufacturing process devices configured to execute the manufacturing process in the processing order.

6. The product manufacturing system according to claim 5, wherein
the step managing device includes an input unit configured to receive an input of the processing order of the electronic document or the output objects of the electronic documents determined by the processing order determination unit, and
the information transmission unit transmits the process information of the electronic document or the output object to the manufacturing process devices configured to execute the manufacturing process in the processing order input into the input unit.

7. The product manufacturing system according to claim 5 or 6, wherein the step managing device includes an RIP device connected to the manufacturing process device in a communicable manner and configured to generate rasterized image data to be transmitted to the manufacturing process device.

8. The product manufacturing system according to claim 5 or 6, wherein the step managing device includes:
a server device configured to store the set of the manufacturing process conditions and including the document creation unit; and
at least one RIP device connected to the server device in a communicable manner, connected to each of the manufacturing process devices in a communicable manner, including the processing order determination unit and the information transmission unit, and configured to generate rasterized image data to be transmitted to the manufacturing process device.

9. The product manufacturing system according to any one of claims 2 to 6, wherein in a case in which the same or a similar product was manufactured in the past, the information transmission unit transmits the process information with a manufacturing process condition used in the past.

10. The product manufacturing system according to any one of claims 2 to 6, wherein the document creation unit creates a step planning report for each work step as the electronic document.

11. The product manufacturing system according to any one of claims 2 to 6, wherein the document creation unit creates an order for each order reception unit as the electronic document.

12. The product manufacturing system according to claim 11, The document creation unit creates, as the electronic document, a manufacture list in which the products are put together across a plurality of order reception units.

13. The product manufacturing system according to any one of claims 2 to 4, wherein the object to be processed has a roll shape.

14. A product manufacturing method using a product manufacturing system including: a plurality of manufacturing process devices configured to execute a manufacturing process in accordance with a manufacturing process condition on an object to be processed to manufacture a product; and a step managing device connected to each of the manufacturing process devices in a communicable manner, the step managing device storing a set of the manufacturing process conditions, the method causing the step managing device to execute:
a creation step of creating an electronic document including information related to manufacturing jobs representing manufacturing units of the product corresponding to work steps including execution of the manufacturing process to be executed by each of the manufacturing process devices; and
after the creation step,
a reception step of receiving a selection operation indicating that one or more manufacturing jobs are selected by an operator from among the created electronic documents or the output objects of the electronic documents; and
a transmission step of transmitting, after the selection operation is received, process information capable of specifying the manufacturing process condition and the object to be processed associated with the selected manufacturing job to the manufacturing process device configured to execute the manufacturing process to be executed in a work step corresponding to the electronic document; or
after the creation step,
a determination step of determining a processing order by sorting the created electronic documents or the output objects of the electronic documents based on process information capable of specifying the manufacturing process condition and the object to be processed associated therewith; and
a transmission step of transmitting the process information of the electronic document or the output object to the manufacturing process devices configured to execute the manufacturing process in the processing order.

15. A product manufacturing program to be executed by a product manufacturing system including: a plurality of manufacturing process devices configured to execute a manufacturing process in accordance with a manufacturing process condition on an object to be processed to manufacture a product; and a step managing device connected to each of the manufacturing process devices in a communicable manner, the step managing device storing a set of the manufacturing process conditions, the program causing the step managing device to execute:
a creation step of creating an electronic document including information related to manufacturing jobs representing manufacturing units of the product corresponding to work steps including execution of the manufacturing process to be executed by each of the manufacturing process devices; and
after the creation step,
a reception step of receiving a selection operation indicating that one or more manufacturing jobs are selected by an operator from among the created electronic documents or the output objects of the electronic documents; and
a transmission step of transmitting, after the selection operation is received, process information capable of specifying the manufacturing process condition and the object to be processed associated with the selected manufacturing job to the manufacturing process device configured to execute the manufacturing process to be executed in a work step corresponding to the electronic document; or
after the creation step,
a determination step of determining a processing order by sorting the created electronic documents or the output objects of the electronic documents based on process information capable of specifying the manufacturing process condition and the object to be processed associated therewith; and
a transmission step of transmitting the process information of the electronic document or the output object to the manufacturing process devices configured to execute the manufacturing process in the processing order.
